# EUROPÄISCHE PATENTSCHRIFT

(11) **EP 2 925 481 B1**
(45) Veröffentlichungstag und Bekanntmachung des Hinweises auf die Patenterteilung: **21.09.2016**
(21) Anmeldenummer: 13807949.6
(22) Anmeldetag: 29.11.2013
(51) Int. Cl.: B23K 26/06, B23K 26/34, B23K 26/073, B23K 26/0622

(54) **VORRICHTUNG SOWIE VERFAHREN ZUR LASERMATERIALBEARBEITUNG**
DEVICE AND METHOD FOR PROCESSING OF MATERIALS USING LASER RADIATION
PROCÉDÉ ET DISPOSITIF DE TRAITEMENT DE MATÉRIAU PAR RAYONS LASER

(30) Priorität: 30.11.2012 DE 102012023376
(43) Veröffentlichungstag der Anmeldung: 07.10.2015
(73) Patentinhaber: DirectPhotonics Industries GmbH, 12849 Berlin (DE)
(72) Erfinder: HEINEMANN, Stefan, Ann Arbor, MI 48105 (US); FRITSCHE, Haro, 10781 Berlin (DE); KRUSCHKE, Bastian, 13405 Berlin (DE); GRIES, Wolfgang, 12159 Berlin (DE); FERRARIO, Fabio, 10247 Berlin (DE); KOCH, Ralf, S-181 44 Lindingö (SE)
(74) Vertreter: Gulde & Partner
(86) Internationale Anmeldenummer: PCT/EP2013/075101
(87) Internationale Veröffentlichungsnummer: WO 2014/083160

(56) Entgegenhaltungen:
- WO-A1-01/60560
- WO-A1-2007/140537
- DE-A1- 19 933 825

## Beschreibung

### Gebiet der Erfindung

Die Erfindung betrifft eine Vorrichtung sowie ein Verfahren zur Lasermaterialbearbeitung.

### Hintergrund der Erfindung

Effiziente Lasermaterialbearbeitung beruht auf der Optimierung der Wechselwirkung von Laserlicht und Materie für eine Vielzahl unterschiedlicher Prozesse.

Beispielsweise ist bekannt, dass beim Schneiden dünner Bleche ein kleiner Fokus mit geringer Tiefenschärfe höhere Schnittgeschwindigkeiten und Schneidqualität ermöglicht als ein großer Fokus. Für dicke Bleche mit Dicken von mehr als etwa 6 mm wird ein größerer Fokus zum effizienten Schneiden benötigt. Eine breitere Schnittfuge muss generiert werden, um die Schmelze effektiv austreiben zu können, wohingegen bei dünnen Blechen eine schmale Schnittfuge ausreichend ist. Um den Fokus schnell an die unterschiedlichen Anforderungen anpassen zu können, wurden spezielle Schneidoptiken entwickelt, welche die mechanische Verschiebung von Linsen erlauben. Weiterhin ist bekannt, dass verschiedene Materialien eine unterschiedliche Wechselwirkung mit dem Laser aufweisen und somit ebenfalls eine Anpassung des Fokus an das Material nötig ist.

Beim Laserschweißen ist ebenso bekannt, dass die Geometrie des Fokus einen großen Einfluss auf die Geometrie und Qualität der Schweißnaht hat. Beispielsweise wird beim schnellen Schweißen von typischerweise mehr als 15 m/min das sogenannte Humping beobachtet. Hierbei bildet die Schweißraupe große Unregelmäßigkeiten aus. Ein länglicher Strahl erhöht die maximale Schweißgeschwindigkeit um bis zu dem Faktor zwei oder darüber hinaus. Typischerweise kommen Schweißoptiken zum Einsatz, welche zwei Foki generieren, die in ihrer Lage zueinander und in ihrer jeweiligen Intensität eingestellt werden können.

Ebenso muss die Fokusgeometrie auf die Dicke der zu verschweißenden Bleche und die vorhandene Geometrie der Fügekanten abgestimmt werden. Offensichtlich ist dies beim Stumpfstoß. Weisen beide Fügekanten eine rechtwinklige Geometrie auf, so resultiert dies in einem minimalen Fügespalt und ein kleiner Fokus erzielt schnelle Schweißgeschwindigkeiten und bessere Qualität. Sind die Fügekanten jedoch schlecht präpariert, so resultiert ein großer Spalt und ein breiter Fokus muss verwendet werden. Für den Überlappstoß ist bekannt, dass eine große Tiefenschärfe und kleiner Fokus eine hohe Spaltüberbrückung zeigen, wohingegen große Foki und geringe Tiefenschärfe nur kleine Spaltbreiten überbrücken können. Bei bekannter Kantenqualität und -geometrie werden jeweils spezielle Optiken eingesetzt. Spaltüberbrückung wird beispielsweise durch Hybridoptiken erreicht, die MIG Schweißen (Metallinertgasschweißen) mit Laserschweißen verbinden oder Draht als Zusatzmaterial in den Laserstrahl einführen. Auch Scanner finden Verwendung, die den Laserstrahl schnell oszillieren und so zusätzliches Material aufschmelzen, welches zur Spaltüberbrückung dient.

Unterschiedliche Materialstärken im Stumpfstoß benötigen eine dedizierte Strahlformung, um die Wärmeeintragung in die Fügezone symmetrisch zu gestalten und das dünne Blech nicht zu überhitzen bzw. das dicke Blech entsprechend zu erwärmen. Hierbei werden oft Doppelstrahloptiken, wie oben beschrieben, eingesetzt.

Das Schweißen unterschiedlicher Materialien stellt aufgrund intermetallischer Phasen ebenso eine Herausforderung dar. Hierbei ist der gezielte Wärmeeintrag und die sich zwischen den Fügepartnern ausbildende Temperaturverteilung entscheidend für die Schweißqualität. Beispielsweise wird beim Verbinden von Aluminium und Kupfer die meiste Strahlintensität auf dem Kupfer eingebracht, um dessen Wärmeleitfähigkeit und höheren Schmelzpunkt zu kompensieren.

Ein weiteres Beispiel für Strahlformung findet sich in unterschiedlich breiten Fügezonen, beispielsweise beim Überlappstoß von Plastik. Feine Geometrien und flächige Verbindungen finden sich in vielen Bauteilen. Absoluter Wärmeeintrag und Linienenergie müssen genau gesteuert werden, um ein Verbrennen des Kunststoffs an der Kante zu verhindern. Oft findet hier eine Belichtung durch Masken oder Scanner Verwendung, welche eine Fokuslinie generieren, die der Nahtgeometrie angepasst ist.

Das Schweißen von verzinkten Blechen stellt eine Herausforderung dar, da das Zink beim Laserschweißen in der Zwischenschicht verdampft und durch die Schmelze ausgast, wobei sich große und unregelmäßige Blasen in der Schweißnaht ergeben, welche die Festigkeit negativ beeinflussen. Es wurde gezeigt, dass spezielle und komplexe Fokusgeometrien das Ausgasen weitgehend unterbinden können. Auch hier findet die Doppelstrahloptik Einsatz, jedoch werden oft komplexere Fokusgeometrien benötigt.

Im Bereich des Auftragschweißens finden eine Vielzahl unterschiedlicher Fokusgeometrien Verwendung. Filigrane Strukturen mit hoher Oberflächengüte verlangen kleine Spots und Leistung, während große Flächen typischerweise mit großen runden oder auch Linienfoki beschichtet werden. Hier werden meist Festoptiken mit dediziertem Fokus eingesetzt.

Ähnlich ist dies beim Laserhärten, wo Fokus und Leistung dynamisch an das Bauteil angepasst werden müssen, um ein Aufschmelzen der Randschicht zu verhindern. Spezielle Festoptiken und auch Scanner finden hier Anwendung, um den Fokus entsprechend zu wählen, bzw. an die Werkzeuggeometrie anzupassen.

Abtragende Prozesse und Bohren profitieren ebenfalls von einer dynamischen Variation des Fokus und der Leistung. So lassen sich beispielsweise unterschiedliche Strukturen oder beliebige Lochgeometrien entsprechend leicht abtragen. Meist wird hierfür ein Scanner benutzt.

Neben der nötigen Flexibilität in Spotgeometrie und Leistung einzelner Prozesse der Lasermaterialbearbeitung ist die Ausführung mehrerer Prozesse mit einer Optik erstrebenswert, um die Anlagennutzung zu optimieren. Jedoch sind die Anforderungen an die Fokusgeometrie und Intensität noch vielfältiger als für einzelne Prozesse, so dass dies mit heutigen Optiken nicht möglich ist.

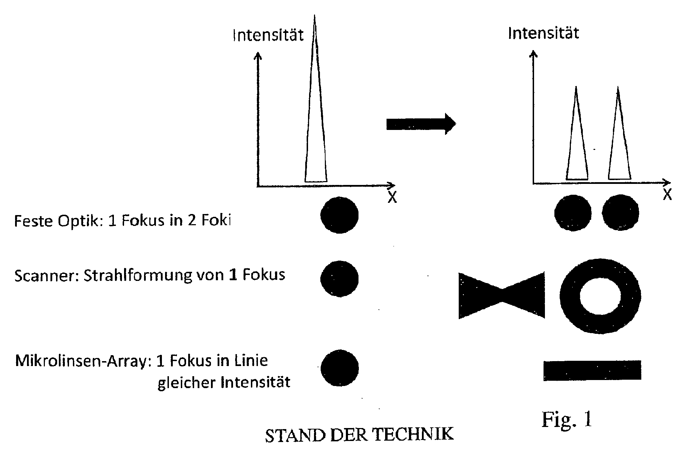

Kommerzielle Optiken sind sehr beschränkt in ihrer Flexibilität die Fokusgeometrie zu variieren. Bekannt sind die Twinspot Optik mit variablem Abstand zweier Foki und deren Intensität, Mikrolinsen-Arrays zur Homogenisierung der Intensität vornehmlich im Zusammenhang mit der Generation von Linienfoki und diffraktive optische Elemente zur Erzeugung eines bestimmten beliebigen Musters in Verbindung mit geringer Leistung (Fig. 1). All diesen Optiken ist gemein, dass sie eine bestimmte Fokusgeometrie erzeugen und, wenn überhaupt, nur eine geringe Flexibilität der Fokusgeometrie erlauben. Hierdurch ist eine Anpassung an die variierenden Anforderungen der Prozesse nur mit großem Zeitaufwand und Kosten möglich.

Scanner leiten einen Laserstrahl über zwei bewegliche Spiegel und fokussieren diesen nachfolgend mit einer f-Theta Linse. Mit dieser Anordnung kann ein fokussierter Laserstrahl mit 10 m/s und schneller über das Werkstück bewegt werden. Spezifische Geometrien werden einprogrammiert. Hiermit lassen sich sehr flexibel unterschiedliche Fokusgeometrien einstellen. Jedoch stellt die schnelle Steuerung zwischen Laser und Scanner eine technische Herausforderung dar. So ist es nur in Grenzen möglich, die Leistung dynamisch an den Prozess anzupassen. Regelungszeiten von wenigen Mikrosekunden werden für eine gute Ortsauflösung benötigt, betragen aber typischerweise einige zehn bis hundert Mikrosekunden. In dieser Zeit kann der Fokus aber schon einige zehntel Millimeter über das Werkstück bewegt worden sein.

Weiterhin ist ein Scanner eine komplexe und teure optische Einheit und auch weit vom Werkstück entfernt, wodurch die Einbringung von Zusatzwerkstoffen erheblichen zusätzlichen Aufwand bedingt.

Eine Vorrichtung mit den Merkmalen des Oberbegriffs des Anspruchs 1 wird im Dokumment DE-A-199 33 825 offenbart.

### Zusammenfassung der Erfindung

Aufgabe der vorliegenden Erfindung ist es, eine optische Anordnung bereitzustellen, welche die oben beschriebenen Nachteile nicht aufweist oder zumindest mildert. Insbesondere sollen eine verbesserte Vorrichtung zur Lasermaterialbearbeitung sowie ein entsprechendes Verfahren bereitgestellt werden, womit sich die Parameter und Bedingungen bei der Lasermaterialbearbeitung noch präziser einstellen lassen.

Diese sowie weitere Aufgaben werden gemäß der vorliegenden Erfindung durch eine Vorrichtung zur Lasermaterialbearbeitung nach Anspruch 1 sowie durch ein entsprechendes Verfahren zur Lasermaterialbearbeitung nach Anspruch 14 gelöst. Weitere vorteilhafte Ausführungsformen sind Gegenstand der rückbezogenen Unteransprüche.

Erfindungsgemäß können auf einfache Weise beliebige Fokusgeometrien realisiert werden, die, verbunden mit einer schnellen elektronischen Steuerung oder Regelung, beliebige Intensitätsverteilungen am Werkstück generieren können. Hierdurch können spezifische Laserbearbeitungsprozesse, wie beispielsweise Schneiden und Schweißen, auf Qualität und Produktivität über einen weiten Bereich von Materialien, Materialdicken und Fügespaltgeometrien optimiert werden. Weiterhin wird so ermöglicht, unterschiedliche Prozesse mit einer Optik auszuführen und somit die Produktivität bei der Lasermaterialbearbeitung weiter zu steigern.

Gemäß einem Aspekt der vorliegenden Erfindung wird eine Vorrichtung zur Lasermaterialbearbeitung offenbart, aufweisend: mindestens zwei Laserstrahlquellen, die Laserstrahlen mit unterschiedlichen Wellenlängen emittieren, Strahlabbildungsmittel, die jeweils den Laserstrahlquellen zugeordnet und ausgebildet sind, die Strahlengänge der jeweiligen Laserstrahlen geeignet einzustellen, eine Strahlüberlagerungseinrichtung, die ausgebildet ist, die Laserstrahlen miteinander zu überlagern, eine Abbildungsoptik, die ausgebildet ist, die überlagerten Laserstrahlen derart abzubilden, dass den Laserstrahlen jeweilige Brennpunkte im Fokus der Abbildungsoptik zugeordnet sind, wobei die Strahlabbildungsmittel die Laserstrahlen auf die jeweiligen Brennpunkte in einer vorbestimmten Anordnung abbilden, die mittels der Strahlabbildungsmittel variierbar ist, und elektronische Steuereinrichtungen, die ausgelegt sind, die Leistungen der jeweiligen Laserstrahlen unterschiedlich zu variieren, wodurch die Intensitäten der jeweiligen Brennpunkte im Fokus der Abbildungsoptik in vorbestimmter Weise variiert werden.

Vorzugsweise sind die Laserstrahlquellen als Diodenlaser ausgebildet. Vorzugsweise emittieren die Laserstrahlquellen (Zentralwellenlänge) im Wellenlängenbereich von 200 bis 2000 nm, besonders bevorzugt im Wellenlängenbereich von 800 bis 1100 nm sowie 1400 bis 1900 nm. Vorzugsweise weisen die Laserstrahlquellen eine Linienbreite von kleiner als 20 nm, bevorzugter kleiner als 10 nm, bevorzugter kleiner als 5 nm, bevorzugter kleiner als 2 nm und besonders bevorzugt kleiner als 1 nm auf. Vorzugsweise sind die Wellenlängenbereiche der Laserstrahlquellen zueinander disjunkt, d.h. nicht überlappend. Die maximale Leistung der einzelnen Laserstrahlquellen beträgt vorzugsweise zwischen 10 W und 10 kW, bevorzugter zwischen 50 W und 1 kW. Vorzugsweise beträgt das Verhältnis der maximalen Leistung zur minimalen Leistung der Vielzahl der Laserstrahlquellen zwischen 1 und 5, bevorzugter zwischen 1 und 2 und noch bevorzugter zwischen 1 und 1,2. Vorzugsweise beträgt das Verhältnis der maximalen Linienbreite (in der 90% der Strahlungsenergie eingeschlossen sind) zur minimalen Linienbreite (in der 90% der Strahlungsenergie eingeschlossen sind) der Vielzahl der Laserstrahlquellen zwischen 1 und 5, bevorzugter zwischen 1 und 2 und noch bevorzugter zwischen 1 und 1,2.

Vorzugsweise sind Strahlabbildungsmittel und Strahlüberlagerungseinrichtung integriert ausgebildet. Vorzugsweise sind die Strahlabbildungsmittel und/oder die Strahlüberlagerungseinrichtung durch (erste) Umlenkspiegel ausgebildet. Die integrierte Vorrichtung von Strahlabbildungsmittel/Strahlüberlagerungseinrichtung weist vorzugsweise eine der Anzahl der Laserstrahlquellen entsprechende Anzahl (oder Anzahl der Laserstrahlquellen minus eins) von (ersten) Umlenkspiegeln auf. Diese (ersten) Umlenkspiegel sind vorzugsweise entlang einer gemeinsamen optischen Achse angeordnet. Vorzugsweise ist mindestens einer der (ersten) Umlenkspiegel drehbar angeordnet, besonders bevorzugt sind sämtliche dieser (ersten) Umlenkspiegel drehbar angeordnet, wobei die Drehachsen der Umlenkspiegel bevorzugt entlang einer gemeinsamen optischen Achse angeordnet sind. Ein der Abbildungsoptik nächstgelegener (erster) Umlenkspiegel ist vorzugsweise ausgebildet, Laserstrahlung einer zugeordneten Laserstrahlquelle zu reflektieren und Laserstrahlung aller anderen Laserstrahlquellen transmissiv passieren zu lassen. Dabei ist es bevorzugt, dass die Reflexion in Bezug auf die Laserstrahlung der zugeordneten Laserstrahlquelle größer als 0,7 (bevorzugt 0,8 und besonders bevorzugt 0,9) und die Transmission in Bezug auf die anderen Laserstrahlquellen größer als 0,7 (bevorzugt 0,8 und besonders bevorzugt 0,9) ist. Ein diesem Umlenkspiegel (entlang der gemeinsamen optischen Achse) wiederum nächstgelegener Umlenkspiegel ist vorzugsweise ausgebildet, Laserstrahlung einer zugeordneten Laserstrahlquelle zu reflektieren und Laserstrahlung der übrigen anderen Laserstrahlquellen transmissiv passieren zu lassen usw. Vorzugsweise sind sämtliche Laserstrahlquellen (in Bezug auf ihre Emissionsrichtung) zueinander parallel ausgerichtet, wobei einer Vielzahl der Laserstrahlquellen (bevorzugt jeder Laserstrahlquelle bzw. jeder Laserstrahlquelle minus eins) ein weiterer (zweiter) jeweils reflektiver Umlenkspiegel zugeordnet ist, der derart angeordnet ist, dass er die Strahlung der zugeordneten Laserstrahlquelle auf den ersten Umlenkspiegel umlenkt, von dem aus die Strahlung der zugeordneten Laserstrahlquelle zur Abbildungsoptik reflektiert wird. In einer bevorzugten Ausführungsvariante der Erfindung wird mindestens einer der ersten Umlenkspiegel derart verkippt, dass der dem zugeordneten Laserstrahl entsprechende Brennpunkt außerhalb der gemeinsamen optischen Achse und/oder außerhalb der Rotationsachse der Abbildungsoptik liegt. Die Abbildungsoptik ist vorzugsweise durch ein rotationssymmetrisches optisches System ausgebildet. Die Rotationsachse der Abbildungsoptik ist vorzugsweise mit der gemeinsamen optischen Achse der ersten Umlenkspiegel identisch. Vorzugsweise sind die Umlenkspiegel derart angeordnet, dass der Brennpunkt mindestens eines der zugeordneten Laserstrahlen auf der Rotationsachse der Abbildungsoptik liegt, wobei der Brennpunkt mindestens eines anderen zugeordneten Laserstrahls außerhalb der Rotationsachse der Abbildungsoptik liegt. Aufgrund der unterschiedlichen Verdrehung (bzw. Verkippung) der ersten/zweiten Umlenkspiegel sind die jeweiligen Brennpunkte variierbar und können gemäß einer vorbestimmten Anordnung eingestellt werden.

Gemäß einer bevorzugten alternativen Ausführungsvariante ist es möglich, eine unterschiedliche Orientierung der Polarisation der jeweiligen Laser mittels gezielter Verkippung von polarisationsselektiven Elementen auszunutzen. Die Leistungen der einzelnen Teilstrahlen lassen sich einfach auf elektronischem Wege regeln, wobei als Abschwächer z.B. Pockels-Zellen (und Polarisatoren) verwendet werden können. Dazu sind die ersten/zweiten Umlenkspiegel vorzugsweise als (verkippbare) polarisationsselektive Elemente ausgebildet und/oder entsprechende polarisationsselektive Elemente im Strahlengang angeordnet. Dabei ist es bevorzugt, dass der Grad der Abhängigkeit der Reflexion/Transmission von der Polarisation elektronisch geregelt werden kann.

Die elektronischen Steuereinrichtungen sind erfindungsgemäß ausgelegt, die Leistungen der jeweiligen Laserstrahlen unterschiedlich zu variieren, wodurch die Intensitäten der jeweiligen Brennpunkte im Fokus der Abbildungsoptik in vorbestimmter Weise variiert werden. Das bedeutet, dass die Leistungen der jeweiligen Laserstrahlen zu unterschiedlichen Zeitpunkten auch unterschiedliche Werte (und zueinander unterschiedliche Verhältnisse) annehmen können. Dadurch kann die Geometrie und die Energieverteilung des gemeinsamen Fokus (zur Materialbearbeitung) bereits durch eine elektronische Leistungssteuerung flexibel und schnell variiert werden, ohne notwendigerweise mechanisch bewegliche Teile verwenden zu müssen. Erfindungsgemäß kann die Variation der Geometrie/Energieverteilung des gemeinsamen Fokus sowohl durch die elektronische Leistungssteuerung als auch durch Verdrehung (bzw. Verkippung) der ersten/zweiten Umlenkspiegel erfolgen. Es ist aber auch möglich, die Variation der Geometrie/Energieverteilung des gemeinsamen Fokus sowohl jeweils entweder durch die elektronische Leistungssteuerung oder durch Verdrehung (bzw. Verkippung) der ersten/zweiten Umlenkspiegel zu realisieren.

Vorzugsweise sind die elektronischen Steuereinrichtungen ausgelegt, einen kontinuierlichen Laserbetrieb mit variierenden Leistungen der jeweiligen Laserstrahlen zu erzeugen, wodurch die Intensitäten der jeweiligen Brennpunkte im Fokus der Abbildungsoptik in vorbestimmter Weise variiert werden. Mit anderen Worten soll während der Materialbearbeitung ein kontinuierlicher Laserbetrieb realisiert werden, wobei die Geometrie/Energieverteilung des gemeinsamen Fokus (aller Laserstrahlen) zeitlich variiert wird.

Vorzugsweise stellen die Strahlabbildungsmittel die Strahlengänge der jeweils zugeordneten Laserstrahlen so ein, dass diese (im Wesentlichen) kollinear sind, wobei die Laserstrahlen jeweils kollimiert sind. Vorzugsweise variieren die elektronischen Steuereinrichtungen die Leistungen der jeweiligen Laserstrahlen durch Steuern der jeweils zugeordneten Laserstrahlquellen. Alternativ oder zusätzlich ist es vorgesehen, dass die elektronischen Steuereinrichtungen die Transmission von jeweiligen elektronisch steuerbaren Abschwächern, die den zugeordneten Laserstrahlquellen jeweils nachgeordnet ist, variieren, um die Leistungen der jeweiligen Laserstrahlen zu variieren. Vorzugsweise ist die Vielzahl der (ersten) Umlenkspiegel durch dichroitische Filter mit einer Flanke der Transmission und/oder Reflexion im jeweiligen Spektralbereich des jeweils zugeordneten Laserstrahls ausgebildet.

Vorzugsweise ist eine zentrale Steuereinrichtung ausgebildet, die elektronischen Steuereinrichtungen, die Strahlabbildungsmittel, die Strahlüberlagerungseinrichtung und/oder die Abbildungsoptik zu steuern. Insbesondere ist eine zentrale Steuereinrichtung ausgebildet, die Position des gemeinsamen Fokus mittels Steuerung der elektronischen Steuereinrichtungen, der Strahlabbildungsmittel, der Strahlüberlagerungseinrichtung und/oder der Abbildungsoptik zu steuern. Vorzugsweise ist die zentrale Steuereinrichtung ausgebildet, die elektronischen Steuereinrichtungen, die Strahlabbildungsmittel, die Strahlüberlagerungseinrichtung und/oder die Abbildungsoptik zeitlich variabel zu steuern. Insbesondere ist eine zentrale Steuereinrichtung ausgebildet, die Geometrie und/oder die Energieverteilung des gemeinsamen Fokus mittels Steuerung der elektronischen Steuereinrichtungen, der Strahlabbildungsmittel, der Strahlüberlagerungseinrichtung und/oder der Abbildungsoptik zu steuern.

Vorzugsweise ist eine Erfassungseinrichtung zum Erfassen eines Signals vorgesehen, das der Lasermaterialbearbeitung im Bereich des (gemeinsamen) Fokus der Abbildungsoptik entspricht. Vorzugsweise ist die Erfassungseinrichtung durch einen optoelektronischen Sensor oder durch eine Videokamera ausgebildet. Vorzugsweise ist die zentrale Steuereinrichtung ausgelegt, die elektronischen Steuereinrichtungen, die Strahlabbildungsmittel, die Strahlüberlagerungseinrichtung und/oder die Abbildungsoptik in Abhängigkeit des erfassten Signals zu steuern.

Vorzugsweise sind in der zentralen Steuereinrichtung (oder in einem dieser zugeordneten Speicher) vorbestimmte Parameter zum Steuern der elektronischen Steuereinrichtungen, der Strahlabbildungsmittel, der Strahlüberlagerungseinrichtung und/oder der Abbildungsoptik abgespeichert. Diese Parameter werden vorzugsweise in Form einer Nachschlagetabelle (look-up table) im Voraus anhand von Versuchsreihen ermittelt. Alternativ werden diese Parameter anhand von Simulationen oder Berechnungen im Voraus ermittelt. Dabei ist es bevorzugt, dass die Parameter in Abhängigkeit von den Abmessungen und dem Material des zu verwendenden Werkstücks ermittelt und abgespeichert werden. Weiter ist es bevorzugt, dass die Parameter in Abhängigkeit von vorherrschenden Prozessbedingungen ermittelt und abgespeichert sind.

Gemäß einem weiteren Aspekt der vorliegenden Erfindung wird ein Verfahren zur Lasermaterialbearbeitung offenbart, bei dem: wenigstens zwei Laserstrahlquellen Laserstrahlen mit unterschiedlichen Wellenlängen emittieren, die Strahlengänge der Laserstrahlen mittels jeweils zugeordneter Strahlabbildungsmittel geeignet eingestellt werden, die Laserstrahlen mittels einer Strahlüberlagerungseinrichtung miteinander (vorzugsweise kollinear) überlagert werden, und die überlagerten Laserstrahlen mittels einer Abbildungsoptik auf ein Werkstück abgebildet werden, sodass den Laserstrahlen jeweilige Brennpunkte im Fokus der Abbildungsoptik auf dem Werkstück zugeordnet sind, wobei die Strahlabbildungsmittel die Laserstrahlen auf die jeweiligen Brennpunkte in einer vorbestimmten Anordnung abbilden, die mittels der Strahlabbildungsmittel variiert werden, und wobei die Leistungen der jeweiligen Laserstrahlen mittels elektronischer Steuereinrichtungen unterschiedlich variiert werden, sodass die Intensitäten der jeweiligen Brennpunkte im Fokus der Abbildungsoptik in vorbestimmter Weise variieren.

Vorzugsweise werden die Leistungen der Laserstrahlen unmittelbar durch Modulation eines jeweiligen Laserdiodenstroms variiert. Vorzugsweise sind zwischen Werkstück und Abbildungsoptik keine weiteren strahlformenden Elemente angeordnet. Vorzugsweise ist das Werkstück während der Lasermaterialbearbeitung ortsfest fixiert. Alternativ ist es bevorzugt, dass das Werkstück während der Lasermaterialbearbeitung entlang einer Ebene, die im Wesentlichen senkrecht zur Rotationsachse der Abbildungsoptik angeordnet ist, verfahrbar ausgebildet ist und/oder dass die Vorrichtung zur Lasermaterialbearbeitung entlang einer Ebene, die im Wesentlichen senkrecht zur Rotationsachse der Abbildungsoptik angeordnet ist, das Werkstück während der Lasermaterialbearbeitung verfahrbar ausgebildet ist. Vorzugsweise ist der (minimale) Abstand zwischen dem Werkstück und der Abbildungsoptik kleiner als 10 m, bevorzugter kleiner als 2 m, bevorzugter kleiner als 1 m, bevorzugter kleiner als 50 cm und noch bevorzugter kleiner als 20 cm.

### Figurenübersicht

Nachfolgend wird die Erfindung in beispielhafter Weise und unter Bezugnahme auf die beigefügten Zeichnungen beschrieben werden, woraus sich weitere Merkmale, Vorteile und zu lösende Aufgaben ergeben werden. Es zeigen:
- Fig. 1: eine Zusammenfassung von herkömmlichen Verfahren, um die Abstände und Intensitäten eines Fokus oder von mehreren Foki zu variieren;
- Fig. 2a-2b: die Verteilung der Intensität von mehreren Laserstrahlen im Orts- und Spektralraum sowie eine Vorrichtung zur Lasermaterialbearbeitung mittels einer solchen Intensitätsverteilung gemäß einer ersten Ausführungsform der vorliegenden Erfindung;
- Fig. 3a-3b: die Verteilung der Intensität von mehreren Laserstrahlen im Orts- und Spektralraum sowie eine Vorrichtung zur Lasermaterialbearbeitung mittels einer solchen Intensitätsverteilung gemäß einer zweiten Ausführungsform der vorliegenden Erfindung;
- Fig. 4: realisierbare Intensitätsverteilungen von mehreren Laserstrahlen im Bereich des Fokus einer Abbildungsoptik auf einem Werkstück bei einer Vorrichtung bzw. einem Verfahren zur Lasermaterialbearbeitung gemäß der vorliegenden Erfindung;
- Fig. 5: Möglichkeiten einer Modulation der Laserstrahlen bei einer Vorrichtung bzw. einem Verfahren zur Lasermaterialbearbeitung gemäß der vorliegenden Erfindung;
- Fig. 6a: die Geometrie bei einem herkömmlichen Verfahren zum Laserbohren als ein Beispiel für eine Lasermaterialbearbeitung im Sinne der vorliegenden Erfindung;
- Fig. 6b und 6c: jeweils die Geometrie zu unterschiedlichen Zeitpunkten (Eindringtiefen der Laserstrahlen in das Werkstück) bei einem Laserbohren als ein Beispiel für eine Lasermaterialbearbeitung gemäß der vorliegenden Erfindung;
- Fig.7a-7c: weitere Möglichkeiten zur Modulation der Laserstrahlen bei einer Vorrichtung bzw. einem Verfahren zur Lasermaterialbearbeitung gemäß der vorliegenden Erfindung; und
- Fig. 8: eine schematische Darstellung einer Vorrichtung zur Lasermaterialbearbeitung gemäß der vorliegenden Erfindung.

In den Figuren bezeichnen identische Bezugszeichen identische oder im Wesentlichen gleichwirkende Elemente oder Elementgruppen.

### Ausführliche Beschreibung von bevorzugten Ausführungsbeispielen

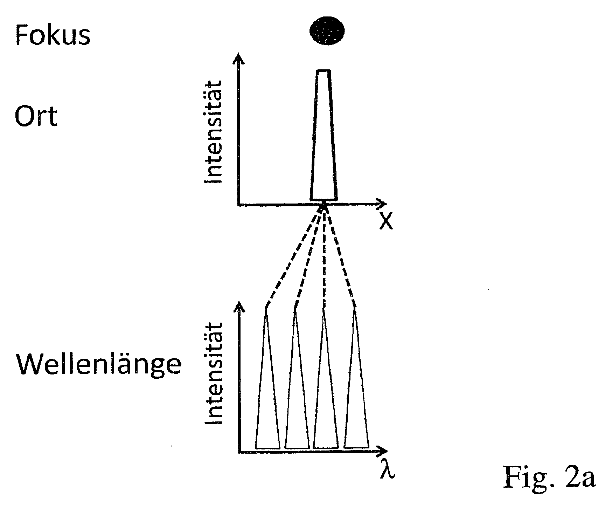

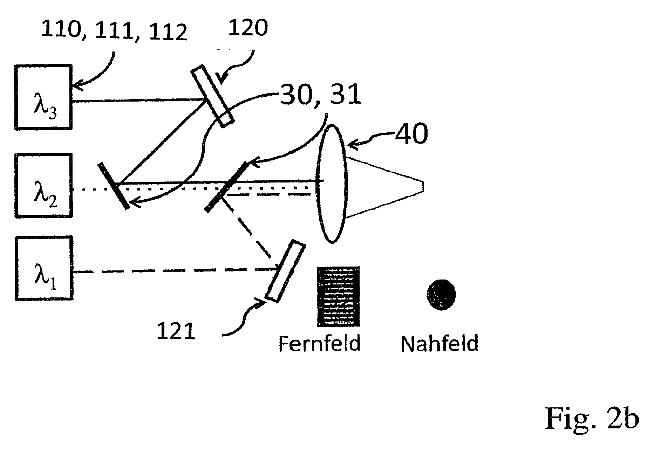

Die Erfindung beruht auf der Kopplung der voneinander unabhängigen Dimensionen von Wellenlänge und Ort (Fig. 2a). Als Laserstrahlquelle dient ein Lasersystem mit mehreren, unabhängig ansteuerbaren Lasern mit unterschiedlicher Wellenlänge. Konventionelles Wellenlängenkoppeln der einzelnen Laser (110, 111, 112) resultiert in einem einzigen Laserstrahl im Ort, aber mit einem breiten Spektrum (Fig. 2b). Hierbei werden die Strahlen mit den Wellenlängen λ1 und λ3 über feste Umlenkspiegel 120, 121 auf wellenlängenselektive Elemente 30, 31 so gelenkt, dass alle drei Laserstrahlen anschließend kollinear sind. Die wellenlängenselektiven Elemente transmittieren eine Wellenlänge und reflektieren eine andere Wellenlänge. Sie können als dichroitische Spiegel oder Volumen Bragg Grating (VBG) ausgeführt sein, wobei die spezifische Anordnung entsprechend angepasst werden muss. Der kombinierte Laserstrahl wird anschließend mit einer Linse 40 fokussiert. Das entsprechende Fernfeld am Ort der Linse und Nahfeld im Fokus sind exemplarisch in der Fig. 2b gezeigt.

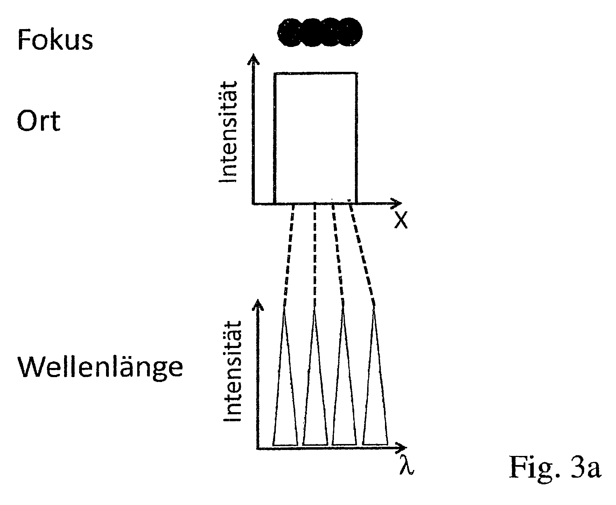

Durch eine Verkippung der wellenlängenselektiven Elemente 30, 31 verlaufen die drei Strahlen der jeweiligen Laser 110, 111, 112 nicht mehr parallel zueinander. Im Fernfeld am Ort der Fokussierlinse 40 sind die individuellen Fernfelder wegen des geringen Abstandes zu den Strahlquellen und der kleinen Ablenkwinkel jedoch nur unwesentlich zueinander verschoben. Beispielhaft werden die einzelnen Laser als Diodenlaser mit einer Restdivergenz von etwa 0,5 mrad und einem Strahlquerschnitt von 14 x 14 mm² ausgeführt. Mit einer Fokuslinse der Brennweite 100 mm wird so ein Fokus von etwa 200 µm generiert. Ein Winkel von 1 mrad zwischen zwei Laserstrahlen führt in dieser Anordnung zu zwei individuellen Foki, deren Zentren 200 µm voneinander entfernt sind. Wird die Verkippung der wellenlängenselektiven Elemente 30, 31 um die jeweils gleiche Achse und um den gleichen Betrag durchgeführt, so ergibt sich im Fokusabstand der Linse 40 ein Linienfokus (vgl. Fig. 3a).

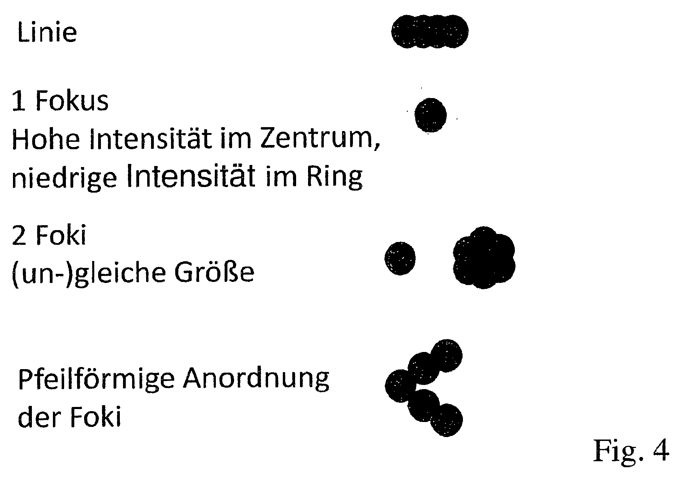

Die Verkippung der wellenlängenselektiven Elemente 30, 31 kann um beliebige Achsen durchgeführt werden. Weiterhin kann die Anzahl der individuellen Laser wesentlich mehr als drei, beispielsweise bis zu zwanzig und mehr betragen. Hierdurch ergibt sich die Möglichkeit eine große Vielzahl von Fokusgeometrien am Werkstück einzustellen (vgl. Fig. 4). Eine Linie wird erzeugt, indem alle wellenlängenselektiven Elemente um die gleiche Achse, aber um unterschiedliche Beträge gekippt werden. Ein runder Fokus mit ringförmiger Intensitätsverteilung wird durch Kippen einer Anzahl N der wellenlängenselektiven Elemente von N Lasern in zwei Achsen erreicht. Die Strahlen der N Laser laufen ringförmig auseinander und werden entsprechend in den Fokus abgebildet. Eine Anzahl M von Lasern verläuft kollinear und werden alle in einen Fokus abgebildet. Das Leistungsverhältnis von Ring zu Kern entspricht dem Verhältnis N/M der jeweiligen Anzahl Laser.

Auf ähnliche Weise lassen sich zwei Foki unterschiedlicher Größe am Werkstück erzeugen. N Laser werden hierbei kollinear auf einen Fokus abgebildet, während M Laser mit unterschiedlichem Pointing auf einen anderen Fokus abgebildet werden, der auch einen anderen Durchmesser aufweisen kann. Die Leistung in den Foki ist hierbei wieder durch die Anzahl N und M der Laser sowie deren Leistung bestimmt. Auf ähnliche Art können eine Vielzahl weiterer Fokusgeometrien erzeugt werden, auch beispielsweise ein Pfeil.

Wird die Strahlung in eine Faser gekoppelt, so sind auf die oben beschriebene Art nur Geometrien mit radialer Symmetrie erzeugbar.

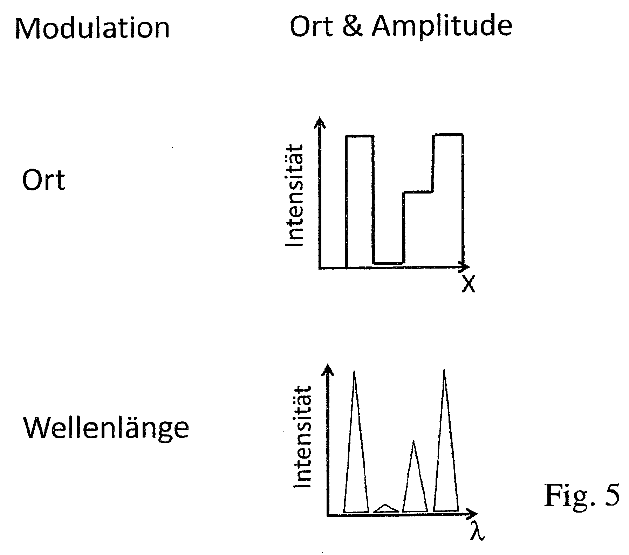

Die oben beschriebene Anordnung und Methode erlaubt beliebige Fokusgeometrien am Werkstück zu erzeugen. Die wellenlängenselektiven Elemente werden hierbei leicht gegeneinander in wohldefinierter Weise verkippt. In Verbindung mit einer Leistungsregelung der einzelnen Laser verschiedener Wellenlänge kann somit die Photonendichte räumlich und zeitlich frei gewählt werden (Fig. 5). Dies führt zu einer maximalen Flexibilität und ermöglicht mit nur einer Fokussieroptik, einzelne Prozesse zu optimieren und eine Vielzahl von Prozessen auszuführen.

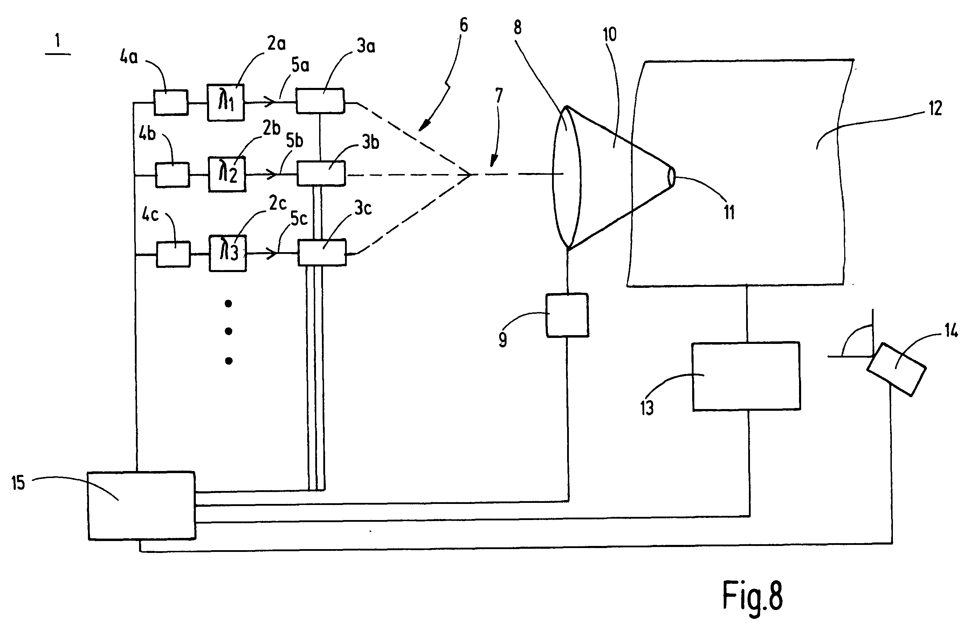

Die Fig. 8 ist eine schematische Darstellung einer Vorrichtung zur Lasermaterialbearbeitung gemäß der vorliegenden Erfindung, beispielsweise zum Laserschneiden, Laserhärten, Laser-Auftragschweißen, zur Laserablation oder zum Laserbohren. Die Laservorrichtung 1 umfasst eine Mehrzahl von Laserstrahlquellen 2a-2c, deren Anzahl größer als zwei ist und bevorzugt von der Größenordnung drei bis zehn oder zwanzig beträgt. Die Laserstrahlquellen 2a-2c emittieren jeweilige Laserstrahlen 5a-5c mit einer vorbestimmten Wellenlänge λ1-λ3, die jeweils unterschiedlich sind. Dies kann durch geeigneten Betrieb der Laserstrahlquellen 2a-2c ohne weiteres realisiert werden. Die Wellenlängen λ1-λ3 können stabilisiert und insbesondere elektronisch gesteuert oder geregelt sein. Bevorzugt handelt es sich bei den Laserstrahlquellen 2a-2c um Laserdioden oder Stacks von Laserdioden, beispielsweise mit Leistungen von einigen Kilowatt. Die Laserstrahlen 5a-5c können bereits kollimiert sein, bevor diese in den Wirkungsbereich der nachgeordneten und jeweils zugeordneten Abbildungsoptiken 3a-3c gelangen. Den Abbildungsoptiken 3a-3c ist eine Kollimationsoptik 6, optional ein Lichtleiter 7, beispielsweise eine Lichtleitfaser oder ein Lichtleitfaserbündel, und eine Fokussieroptik 8, beispielsweise ein übliches Fokussierobjektiv, zugeordnet, wobei die Fokussieroptik 8 mittels eines Aktuators 9, beispielsweise einer elektronisch ansteuerbaren xyz-Verstelleinrichtung, in den Raumrichtungen frei verstellt werden kann. Mittels der Fokussieroptik 8 lässt sich so eine gewünschte Position oder ein gewünschter Linienverlauf des Fokus 11 auf dem Werkstück 12 realisieren. Das Werkstück kann mit einem Aktuator, beispielsweise einer elektronisch ansteuerbaren xyz-Verstelleinrichtung, in den Raumrichtungen frei relativ zu der Fokussieroptik 8 verfahren werden, wodurch der Fokus 11 geeignet auf das Werkstück 12 fokussiert und/oder verfahren werden kann.

Eine Erfassungseinrichtung 14, beispielsweise ein optoelektronischer Sensor oder eine Videokamera, ist auf den Bereich des Fokus 11 auf dem Werkstück gerichtet und erfasst ein elektronisches Signal, das an eine zentrale Steuereinrichtung 15, beispielsweise eine CPU, übermittelt wird, die sämtliche Komponenten der dargestellten Laservorrichtung 1 je nach den Erfordernissen geeignet steuern oder regeln kann, wie nachfolgend beschrieben.

Den Laserstrahlquellen 2a-2c sind elektronische Steuereinrichtungen 4a-4c zugeordnet, welche relevante Betriebsparameter der Laserstrahlquellen 2a-2c geeignet steuern, insbesondere einen Laserdiodenstrom und Komponenten, die einer Wellenlängenselektion, Strahlauskopplung, Laserstrahlmodulation und dergleichen dienen.

Die Abbildungsoptiken 3a-3c bewirken alleine oder im Zusammenwirken mit der nachgeordneten Kollimationsoptik 6 eine vorbestimmte Anordnung der den jeweiligen Laserstrahlen 5a-5c entsprechenden Brennpunkten im Fokus 11 der Fokussieroptik 8 auf dem Werkstück 12.

Die elektronischen Steuereinrichtungen 4a-4c können die relevanten Betriebsparameter der Laserstrahlquellen 2a-2c insbesondere hochfrequent und mit hoher Auflösung steuern oder regeln, insbesondere mit Frequenzen, die weit oberhalb der Betriebsfrequenzen von üblichen mechanischen Komponenten zur Variation der Intensität oder Abbildung der Laserstrahlen 5a-5c liegen. Während die letztgenannten Frequenzen maximal im Bereich von einem oder wenigen kHz liegen, können die Betriebsparameter der Laserstrahlquellen 2a-2c erfindungsgemäß mittels der elektronischen Steuereinrichtungen 4a-4c mit Frequenzen von mehreren zehn kHz bis zu einem oder mehreren MHz variiert werden, was erfindungsgemäß einen weiteren Freiheitsgrad zur Einstellung der Parameter bei der Lasermaterialbearbeitung ermöglicht. Beispielsweise können die Diodenströme von Laserdioden oder Stacks von Laserdioden im MHz-Bereich variiert werden.

Die elektronischen Steuereinrichtungen 4a-4c wirken bevorzugt unmittelbar auf die Laserstrahlquellen 2a-2c ein, beispielsweise durch Variieren der Diodenströme. Grundsätzlich denkbar ist im Sinne der vorliegenden Erfindung auch, dass weitere optische Komponenten, die den Laserstrahlquellen 2a-2c nachgeordnet sind, die Leistungen der Laserstrahlen 5a-5c geeignet modulieren, beispielsweise in Gestalt von elektro-optischen Modulatoren, die ohne weiteres im MHz-Bereich betrieben werden können und Teil der Abbildungsoptiken 3a-3c sein können.

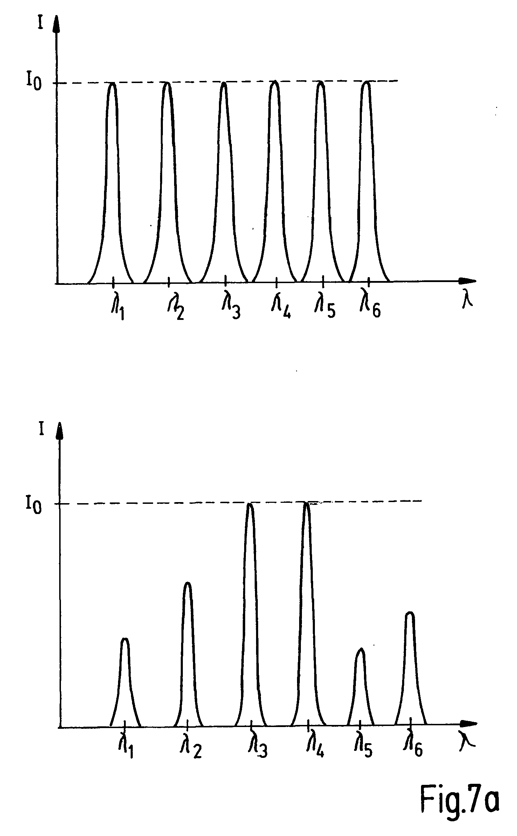

Die Wellenlängen λ1-λ3 der Laserstrahlen 5a-5c sind im Sinne der vorliegenden Erfindung unterschiedlich und können durchaus um einige Nanometer oder mehr voneinander abweichen. Bevorzugt wird, dass die Frequenz- oder Wellenlängenabstände der Laserstrahlen 5a-5c im Frequenz- oder Wellenlängenraum äquidistant oder in regelmäßigen oder regelmäßig variierenden Verhältnissen zueinander stehen, wie beispielhaft in den Figuren 7a bis 7c dargestellt.

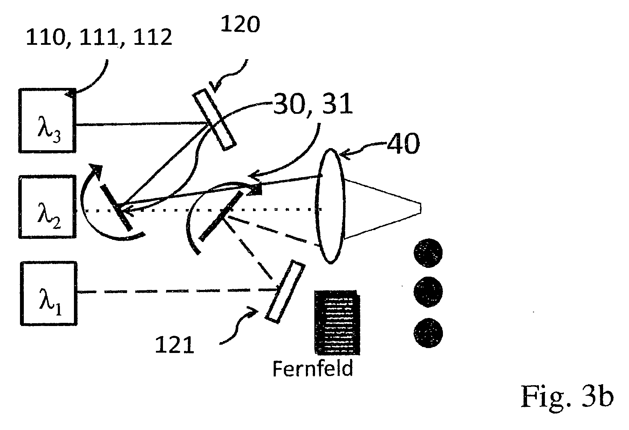

Die Abbildungsoptik 3a-3c kann insbesondere von einer Mehrzahl von Umlenkspiegeln ausgebildet sein, insbesondere in der in den Figuren 2b oder 3b dargestellten gefalteten Konfiguration. Wie in der Fig. 8 dargestellt, können so sämtliche Laserstrahlen 5a-5c kollinear auf ein gemeinsames, kollimiertes Strahlenbündel abgebildet werden, das mit geringer Divergenz auf die Abbildungsoptik 8 abgebildet wird. Die Laserstrahlen 5a-5c können im Wesentlichen vollständig überlappen, sodass sie dann im Wesentlichen (abgesehen von chromatischen Abbildungsfehlern) auf einen gemeinsamen Fokus 11 abgebildet werden, wie im oberen Bildteil der Fig. 2a dargestellt, oder können auf mehrere zueinander beabstandete oder nur teilweise miteinander überlappende Brennpunkte im Fokus 11 der Fokussieroptik 8 abgebildet werden (wie beispielsweise im oberen Bildteil der Fig. 3a dargestellt). Auf diese Weise können die den jeweiligen Laserstrahlen 5a-5c zugeordneten Brennpunkte mittels der gemeinsamen Fokussieroptik 8 in einer nahezu beliebigen geometrischen Anordnung im Fokus 11 der Fokussieroptik 8 abgebildet werden (wie beispielhaft in der Fig. 4 dargestellt).

Die Leistungen der einzelnen Laserstrahlen 5a-5c können erfindungsgemäß elektronisch hochfrequent variiert werden, sodass die Intensitäten der den jeweiligen Laserstrahlen 5a-5c zugeordneten Brennpunkte im Fokus der Fokussieroptik 8 hochfrequent und nahezu beliebig variiert werden können, wodurch sich erfindungsgemäß neue Freiheitsgrade bei der Laserbearbeitung von Werkstücken ergeben, wie nachfolgend ausgeführt.

Wenngleich in der Fig. 8 dargestellt ist, dass eine gemeinsame Fokussieroptik 8 sämtliche Laserstrahlen 5a-5c auf den Fokus auf dem Werkstück 12 abbildet, ist grundsätzlich denkbar, dass die Fokussieroptik 8 mehrere fokussierende optische Komponenten oder Abbildungssysteme umfasst, die jeweils einem der mehreren Laserstrahlen 5a-5c zugeordnet sind. Bei einer solchen Ausführungsform ist auf eine präzise Justierung der mehreren fokussierenden optischen Komponenten oder Abbildungssysteme zu achten, sodass sämtliche Laserstrahlen 5a-5c auf einen gemeinsamen Fokus bzw. Brennfleck auf dem Werkstück 12 abgebildet werden.

Die Spiegel der vorgenannten Abbildungsoptiken 3a-3c können als dichroitische Filter ausgebildet sein, die Flanken ansteigender Transmission oder Reflexion im Wellenlängenbereich der jeweils zugeordneten Laserquelle 5a-5c haben. Durch eine gefaltete Anordnung solcher dichroitischer Filter, wie beispielhaft in den Figuren 2b und 3b dargestellt, kann die Wellenlänge der Laser 2a-2c (vgl. Fig. 2b und Fig. 3b: Bezugszeichen 10-12) stabilisiert und insbesondere auch eine Wellenlängenselektion und/oder -stabilisierung der einzelnen Laser 2a-2c realisiert werden. Insbesondere kann durch Drehen bzw. Verkippen von als Umlenkspiegel wirkenden dichroitischen Filtern (vgl. Fig. 2b und Fig. 3b: Bezugszeichen 20, 21, 20, 31) gleichzeitig eine Wellenlängenselektion und Wellenlängenstabilisierung der einzelnen Laser 2a-2c realisiert werden.

Sämtliche Umlenkspiegel der gefalteten Spiegelanordnungen gemäß den Figuren 2b oder 3b können um eine gemeinsame Achse verkippt bzw. verdreht werden, sodass die Brennpunkte der jeweiligen Laserstrahlen 5a-5c im Bereich des Fokus der Fokussieroptik 8 auf dem Werkstück entlang einer Linie verlaufend angeordnet sein werden, wie beispielhaft in der obersten Zeile der Fig. 4 dargestellt. Durch Verkippen bzw. Verdrehen solcher Umlenkspiegel in unterschiedliche Raumrichtungen können nahezu beliebige geometrische Verteilungen der Brennpunkte der jeweiligen Laserstrahlen 5a-5c im Bereich des Fokus der Fokussieroptik 8 auf dem Werkstück 12 realisiert werden, wie beispielhaft in den weiteren Zeilen der Fig. 4 dargestellt.

Beispiele für die Modulation der jeweiligen Laserstrahlen 5a-5c im Sinne der vorliegenden Erfindung sind in den Figuren 7a-7c zusammengefasst. Gemäß der Fig. 7a sind mehrere Laserstrahlen im Wellenlängenbereich bevorzugt unter regelmäßigen Abständen zueinander bei Wellenlängen λ1-λ6 angeordnet, insbesondere jeweils mit einer zugehörigen gaußförmigen Spektralverteilung. Die Breiten der im oberen Bildteil der Fig. 7a dargestellten gaußförmigen Intensitätsverteilungen können insbesondere gleich sein. Wie im unteren Bildteil der Fig. 7a dargestellt, können die Intensitäten der einzelnen Laserstrahlen mit den Wellenlängen λ1-λ6 geeignet variiert werden, was insbesondere durch geeignete Amplituden- oder Pulsbreitenmodulation (PWM) der jeweiligen Diodenströme realisiert werden kann. Übertragen auf den Ortsraum im Fokus auf dem Werkstück kann so durch Einstellen der Intensitäten der jeweiligen Brennpunkte der Laserstrahlen eine nahezu beliebige räumliche Verteilung der Intensität im Fokus der Fokussieroptik 8 (vgl. Fig. 8) auf dem Werkstück realisiert werden.

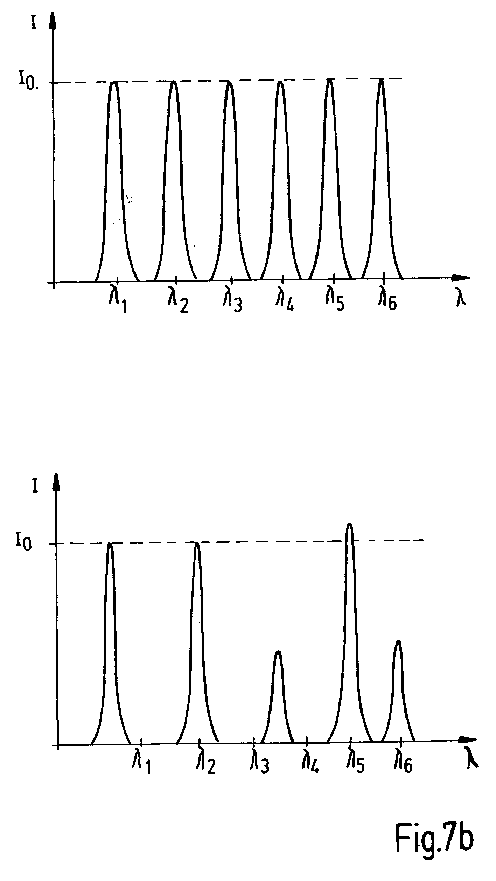

Nach der Fig. 7b werden ergänzend zur Intensität (oder alternativ hierzu) die Wellenlängen der Laserstrahlen variiert, was schon alleinig bedingt durch chromatische Abbildungsfehler der Fokussieroptik 8 (vgl. Fig. 8) im Fokus auf dem Werkstück ebenfalls zu einer lokalen Veränderung der Intensitäten der jeweiligen Brennpunkte der Laserstrahlen führen kann.

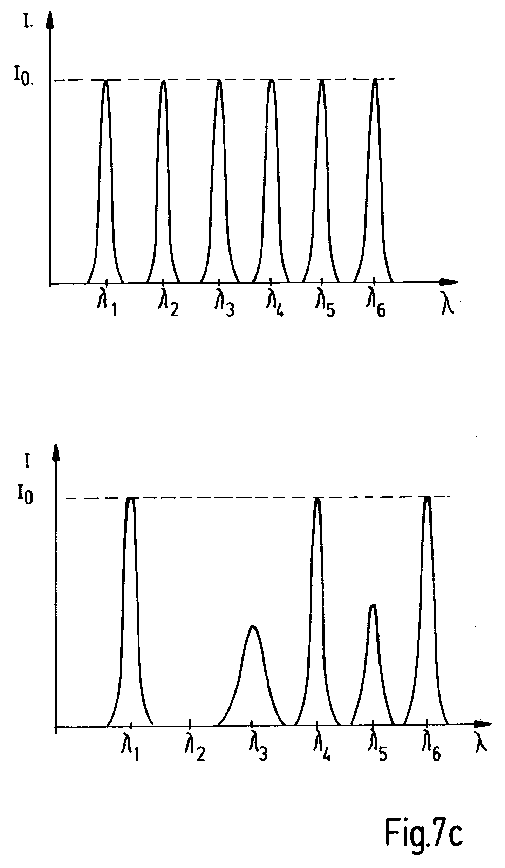

Nach der Fig. 7c werden ergänzend zur Intensität (oder alternativ hierzu) die spektralen Breiten der jeweiligen Laserstrahlen bei den Wellenlängen λ1-λ6 variiert, was die Prozessparameter der Lasermaterialbearbeitung im Fokus auf dem Werkstück ebenfalls variieren kann. Eine solche Veränderung lässt sich beispielsweise durch elektronisch steuerbare Güteschalter, insbesondere intracavity Güteschalter, realisieren.

Die Effekte nach der vorliegenden Erfindung werden nachfolgend am Beispiel des Laserbohrens (stellvertretend für beliebige andere Laser-Materialbearbeitungsprozesse gemäß der vorliegenden Erfindung) näher erläutert.

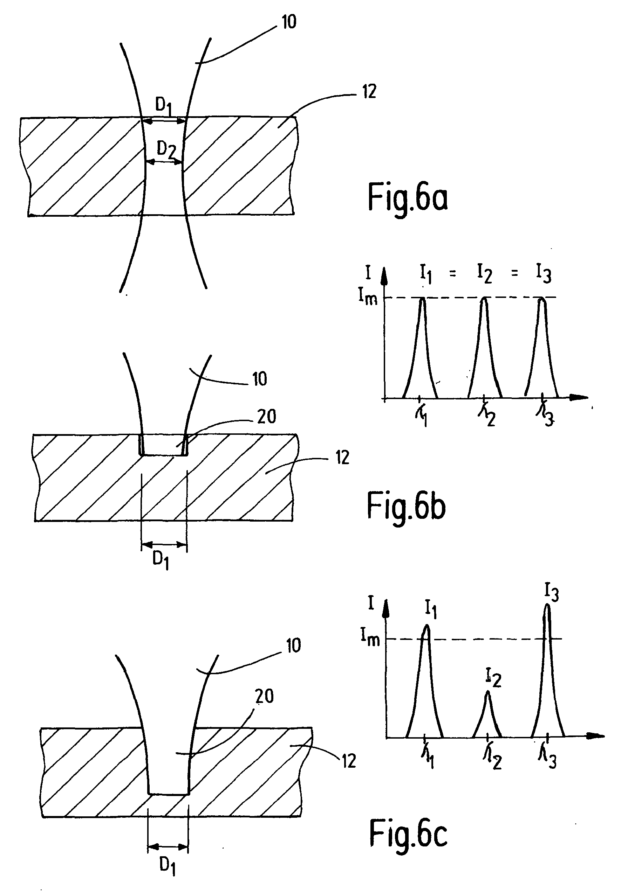

Die Fig. 6a fasst die Bedingungen beim herkömmlichen Laserbohren mittels eines fokussierten Laserstrahls zusammen. Der Laserstrahl 10 bildet im Bereich des Fokus der Fokussieroptik eine gaußförmige Strahltaille aus, sodass die Öffnungsweite D1 des Bohrlochs an der Oberfläche des Werkstücks 12 größer ist als tiefer im Material des Werkstücks 12 (beispielhaft durch die Öffnungsweite D2 angedeutet). Dies limitiert die erzielbare Steilheit von Kanten solcher Laserbohrlöcher oder bei anderen Materialbearbeitungsprozessen entsprechende geometrische Größen und Eigenschaften des bearbeiteten Werkstücks. Zwar ließe sich im Laufe der Materialbearbeitung beispielsweise der Abstand oder die Fokussierung der verwendeten Fokussieroptik variieren, wie beispielhaft in der DE 199 61 918 A1 offenbart, doch kann eine solche Veränderung bedingt durch die hierfür notwendigen mechanischen Verstellungen regelmäßig nur vergleichsweise langsam ausgeführt werden.

Im Gegensatz dazu lassen sich erfindungsgemäß entscheidende Parameter des Laser-Materialbearbeitungsprozesses rein (oder ergänzend) elektronisch variieren, sodass die entsprechenden Veränderungen erheblich schneller (um bis zu mehreren Größenordnungen) ausgeführt werden können. Dies ist beispielhaft für das Laserbohren (stellvertretend für beliebige andere Laser-Materialbearbeitungsprozesse gemäß der vorliegenden Erfindung) in den Figuren 6b und 6c dargestellt, die das Profil der Bohrung 20 zu zwei unterschiedlichen Zeitpunkten des Laserbohrens darstellen. Zu Beginn des Laserbohrens wird das einfallende fokussierte Laserstrahlbündel 10 - vorgebeben durch die Abbildungseigenschaften und Betriebsparameter der Laservorrichtung 1 gemäß der Fig. 8 - in der beispielhaft dargestellten Weise auf die Oberfläche des Werkstücks 12 fokussiert, was in einer Öffnungsweite D1 der Bohrung 20 zu Beginn des Laserbohrens resultiert.

Zu einem späteren Zeitpunkt, wie in der Fig. 6c dargestellt, sind die Abbildungs- und Fokussierungsbedingungen des Laserstrahlbündels 10 bedingt durch die erfindungsgemäße elektronische Steuerung von Komponenten der Laservorrichtung 1 gemäß der Fig. 8 unterschiedlich, sodass auch zu dem späteren Zeitpunkt - bedingt durch die jeweils vorherrschenden Abbildungs- und Fokussierungsbedingungen des Laserstrahlbündels 10 - eine im Wesentlichen identische Öffnungsweite D1 der Bohrung 20 realisiert werden kann. Die Bohrung 20 kann somit erfindungsgemäß mit hoher Kantensteilheit und Präzision ausgebildet werden.

Die Bedingungen zur Abbildung und Fokussierung der einzelnen Laserstrahlen 5a-5c (vgl. Fig. 8) des Laserstrahlbündels 10 können erfindungsgemäß auch hochfrequent variiert werden. Dies ermöglicht erfindungsgemäß eine höhere Präzision bei der Materialbearbeitung bei hohen Geschwindigkeiten. Die vorgenannten Modulationstechniken (Leistungs- bzw. Intensitätsmodulation, Frequenzmodulation, Gütemodulation) können auch beliebig räumlich und zeitlich miteinander kombiniert werden. Die vorgenannten Modulationstechniken können selbstverständlich auch mit herkömmlich langsameren mechanischen oder anderweitig realisierten Modulationstechniken kombiniert werden. Beispielsweise können die Umlenkspiegel der Abbildungsoptik in der Art von Scannerspiegeln periodisch oder entsprechend einem vorbestimmten Muster gescannt bzw. verstellt werden, während gleichzeitig die vorgenannte Leistungs- bzw. Intensitätsmodulation, Frequenzmodulation, Gütemodulation und dergleichen elektronisch und mit geeigneten Frequenzen ausgeführt wird.

Diese Modulationstechniken können auch mittels der in der Fig. 8 dargestellten zentralen Steuereinrichtung 15 geeignet gesteuert oder geregelt werden. Hierzu wird der Fokus 11 mit der vorstehend beschriebenen Erfassungseinrichtung 14 überwacht bzw. erfasst und auf die Modulation auf Grundlage des erfassten Signals geeignet gesteuert oder geregelt. Zu diesem Zweck können in der zentralen Steuereinrichtung 15 oder in einem dieser zugeordneten Speicher (nicht dargestellt) vorbestimmte Parameter zum Steuern der elektronischen Steuereinrichtungen 4a-4c und/oder weitere Komponenten der Laservorrichtung 1, beispielsweise der Strahlabbildungsmittel 3a-3c und/oder Strahlüberlagerungseinrichtung 6 und/oder der Abbildungsoptik 8, abgespeichert sein, jeweils entsprechend einer gewünschten vorbestimmten Lasermaterialbearbeitung. Diese Parameter können selbstverständlich auch spezifisch für das jeweils verwendete Material des Werkstücks 12 oder die weiter vorherrschenden Prozessbedingungen abgespeichert sein. Diese Parameter können beispielsweise in Form einer Nachschlagetabelle (look-up table) im Voraus anhand von Versuchsreihen ermittelt werden, können jedoch auch anhand von Simulationen oder Berechnungen ermittelt werden.

Wie dem Fachmann beim Studium der vorstehenden Beschreibung ersichtlich sein wird, können die obigen Merkmale nach der vorliegenden Erfindung auch in beliebiger anderer geeigneter Weise, als vorstehend beschrieben, miteinander kombiniert werden. Solche Modifikationen sollen von dem Schutzumfang der beigefügten Patentansprüche mit umfasst sein, soweit diese von dem allgemeinen Lösungsgedanken der Erfindung, wie vorstehend beschrieben, gleichfalls Gebrauch machen.

### Bezugszeichenliste

- 1: Vorrichtung zur Lasermaterialbearbeitung
- 2a-2c: Laserstrahlquellen
- 3a-3c: Abbildungsoptik
- 4a-4c: Laser-Steuereinrichtung
- 5a-5c: Laserstrahl
- 6: Kollimationsoptik
- 7: Abbildungsoptik / Lichtleiter
- 8: Fokussierungsoptik
- 9: Aktuator
- 10: Fokussierter Laserstrahl
- 11: Fokus
- 12: Werkstück
- 13: Aktuator
- 14: Kamera / Sensor
- 15: zentrale Steuereinrichtung / CPU
- 20: Bohrung
- 30: wellenlängenselektives Element
- 31: wellenlängenselektives Element
- 40: Linse
- 110: Laser
- 111: Laser
- 112: Laser
- 120: Umlenkspiegel
- 121: Umlenkspiegel

## Patentansprüche

1. Vorrichtung zur Lasermaterialbearbeitung, aufweisend:
mindestens zwei Laserstrahlquellen (2a-2c), die Laserstrahlen (5a-5c) mit unterschiedlichen Wellenlängen emittieren,
Strahlabbildungsmittel (3a-3c), die jeweils den Laserstrahlquellen (2a-2c) zugeordnet und ausgebildet sind, die Strahlengänge der jeweiligen Laserstrahlen (5a-5c) geeignet einzustellen,
eine Strahlüberlagerungseinrichtung (6), die ausgebildet ist, die Laserstrahlen (5a-5c) miteinander zu überlagern,
eine Abbildungsoptik (8), die ausgebildet ist, die überlagerten Laserstrahlen (5a-5c) auf ein Werkstück (12) derart abzubilden, dass den Laserstrahlen (5a-5c) jeweilige Brennpunkte im Fokus der Abbildungsoptik (8) auf dem Werkstück (12) zugeordnet sind,
und
elektronische Steuereinrichtungen (4a-4c), die ausgelegt sind, die Leistungen der jeweiligen Laserstrahlen (5a-5c) unterschiedlich zu variieren, wodurch die Intensitäten der jeweiligen Brennpunkte im Fokus der Abbildungsoptik (8) in vorbestimmter Weise variiert werden, **dadurch gekennzeichnet, dass** die Strahlabbildungsmittel die Laserstrahlen (5a-5c) auf die jeweiligen Brennpunkte in einer vorbestimmten Anordnung abbilden, die mittels der Strahlabbildungsmittel (3a-3c) variierbar ist.

2. Vorrichtung nach Anspruch 1, wobei die Strahlüberlagerungseinrichtung (6) eine Vielzahl von Umlenkspiegeln (120, 121, 30, 31) umfasst, wobei mindestens einer der Umlenkspiegel (30, 31) derart angeordnet und ausgebildet ist, dass er von mindestens einem der Laserstrahlen (5a-5c) durchlaufen wird und mindestens einen der Laserstrahlen (5a-5c) reflektiert.

3. Vorrichtung nach einem der vorhergehenden Ansprüche, wobei die Strahlabbildungsmittel die Strahlengänge der jeweils zugeordneten Laserstrahlen (5a-5c) so einstellen, dass diese im Wesentlichen kollinear sind, wobei die Laserstrahlen (5a-5c) jeweils kollimiert sind.

4. Vorrichtung nach einem der vorhergehenden Ansprüche, wobei die Strahlabbildungsmittel verkippbare und/oder verdrehbare Umlenkspiegel (120) umfassen, um die vorbestimmte Anordnung der jeweiligen Brennpunkte im Fokus der Abbildungsoptik (8) geeignet einzustellen.

5. Vorrichtung nach einem der vorhergehenden Ansprüche, wobei die elektronischen Steuereinrichtungen (4a-4c) die Leistungen der jeweiligen Laserstrahlen (5a-5c) durch Steuern der jeweils zugeordneten Laserstrahlquellen (2a-2c) variieren.

6. Vorrichtung nach einem der vorhergehenden Ansprüche, wobei die elektronischen Steuereinrichtungen (4a-4c) die Transmission eines jeweiligen elektronisch steuerbaren Abschwächers (3a-3c), der den zugeordneten Laserstrahlquellen (2a-2c) jeweils nachgeordnet ist, variieren, um die Leistungen der jeweiligen Laserstrahlen (5a-5c) zu variieren.

7. Vorrichtung nach einem der vorhergehenden Ansprüche, wobei die Strahlüberlagerungseinrichtung (6) einstellbar ist, um die Strahlüberlagerung der Laserstrahlen (5a-5c) einzustellen, wodurch die Abbildung der jeweiligen Brennpunkte im Fokus der Abbildungsoptik (8) variiert wird.

8. Vorrichtung nach einem der vorhergehenden Ansprüche, wobei eine Vielzahl von Umlenkspiegeln (30, 31) durch dichroitische Filter mit einer Flanke der Transmission oder Reflexion im jeweiligen Spektralbereich des jeweils zugeordneten Laserstrahls (5a-5c) ausgebildet sind.

9. Vorrichtung nach einem der vorhergehenden Ansprüche, weiterhin umfassend eine zentrale Steuereinrichtung (15) zum Steuern der elektronischen Steuereinrichtungen (4a-4c), der Strahlabbildungsmittel (3a-3c), der Strahlüberlagerungseinrichtung (6) und/oder der Abbildungsoptik (8).

10. Vorrichtung nach einem der vorhergehenden Ansprüche, wobei die zentrale Steuereinrichtung (15) ausgebildet ist, die elektronischen Steuereinrichtungen (4a-4c), die Strahlabbildungsmittel (3a-3c), die Strahlüberlagerungseinrichtung (6) und/oder die Abbildungsoptik (8) zeitlich variabel zu steuern.

11. Vorrichtung nach einem der vorhergehenden Ansprüche, weiterhin umfassend eine Erfassungseinrichtung (14) zum Erfassen eines Signals, das der Lasermaterialbearbeitung im Bereich des Fokus der Abbildungsoptik (8) entspricht.

12. Vorrichtung nach Anspruch 11, wobei die Erfassungseinrichtung (14) durch einen optoelektronischen Sensor oder eine Videokamera ausgebildet ist.

13. Vorrichtung nach einem der Ansprüche 11 und 12, wobei die zentrale Steuereinrichtung (15) ausgelegt ist, die elektronischen Steuereinrichtungen (4a-4c), die Strahlabbildungsmittel (3a-3c), die Strahlüberlagerungseinrichtung (6) und/oder die Abbildungsoptik (8) in Abhängigkeit des erfassten Signals zu steuern.

14. Verfahren zur Lasermaterialbearbeitung, insbesondere für eine Vorrichtung zur Lasermaterialbearbeitung nach einem der vorhergehenden Ansprüche, bei dem:
wenigstens zwei Laserstrahlquellen (2a-2c) Laserstrahlen (5a-5c) mit unterschiedlichen Wellenlängen emittieren,
die Strahlengänge der Laserstrahlen (5a-5c) mittels jeweils zugeordneter Strahlabbildungsmittel (3a-3c) geeignet eingestellt werden,
die Laserstrahlen (5a-5c) mittels einer Strahlüberlagerungseinrichtung (6) miteinander überlagert werden, und
die überlagerten Laserstrahlen (5a-5c) mittels einer Abbildungsoptik (8) auf ein Werkstück (12) abgebildet werden, sodass den Laserstrahlen (5a-5c) jeweilige Brennpunkte im Fokus der Abbildungsoptik (8) auf dem Werkstück (12) zugeordnet sind,
wobei die Strahlabbildungsmittel die Laserstrahlen (5a-5c) auf die jeweiligen Brennpunkte in einer vorbestimmten Anordnung abbilden, die mittels der Strahlabbildungsmittel (3a-3c) variiert werden, und
wobei die Leistungen der jeweiligen Laserstrahlen (5a-5c) mittels elektronischer Steuereinrichtungen (4a-4c) unterschiedlich variiert werden, sodass die Intensitäten der jeweiligen Brennpunkte im Fokus der Abbildungsoptik (8) in vorbestimmter Weise variieren.

15. Verfahren nach Anspruch 14, wobei die Leistungen der Laserstrahlen (5a-5c) unmittelbar durch Modulation eines jeweiligen Laserdiodenstroms variiert werden.

## Claims

1. A device for processing laser material comprising:
at least two laser beam sources (2a-2c) which emit laser beams (5a-5c) of different wavelengths,
beam imaging devices (3a-3c) which are assigned to the laser beam sources (2a-2c) respectively and are configured to adjust the beam paths of the respective laser beams (5a-5c) appropriately,
a beam superimposing device (6) which is designed to superimpose the laser beams (5a-5c) onto one another,
a projection lens (8), which is configured to display the superimposed laser beams (5a-5c) onto a workpiece (12) in such a way that respective focal points are assigned to the laser beams (5a-5c) in the focus of the projection lens (8) on the workpiece (12),
electronic control devices (4a-4c) which are designed to vary the powers of the respective laser beams (5a-5c) differently, so that the intensities of the respective focal points are varied in a prespecified manner in the focus of the projection lens (8), **characterised in that** the beam imaging devices display the laser beams (5a-5c) on the respective focal points in a predetermined arrangement which can be varied by means of the beam imaging devices (3a-3c).

2. The device according to claim 1, wherein the beam superimposing device (6) comprises a plurality of deflection mirrors (120, 121, 30, 31), wherein at least one of the deflection mirrors (30, 31) is arranged and configured in such a way that at least one of the laser beams (5a-5c) passes through it and it reflects at least one of the laser beams (5a-5c).

3. The device according to any one of the preceding claims, wherein the beam imaging devices adjust the beam paths of the respectively associated laser beams (5a-5c) in such a way that they are substantially collinear, wherein the laser beams (5a-5c) are collimated respectively.

4. The device according to any one of the preceding claims, wherein the beam imaging devices comprise tiltable and/or rotatable deflection mirrors (120) in order to adjust the prespecified arrangement of the respective focal points in the focus of the projection lens (8) appropriately.

5. The device according to any one of the preceding claims, wherein the electronic control devices (4a-4c) vary the powers of the respective laser beams (5a-5c) by controlling the respectively assigned laser beam sources (2a-2c).

6. The device according to any one of the preceding claims, wherein the electronic control devices (4a-4c) vary the transmission of a respective electronically controllable attenuator (3a-3c) which is arranged downstream of the assigned laser beam sources (2a-2c) respectively, in order to vary the powers of the respective laser beams (5a-5c).

7. The device according to any one of the preceding claims, wherein the beam superimposing device (6) can be adjusted in order to adjust the superimposing of the laser beams (5a-5c), and thus the imaging of the respective focal points is varied in the focus of the projection lens (8).

8. The device according to any one of the preceding claims, wherein a plurality of deflection mirrors (30, 31) are formed by dichroic filters with an edge of the transmission or reflection within the respective spectral range of the respectively assigned laser beam (5a-5c).

9. The device according to any one of the preceding claims, further comprising a central control device (15) for controlling the electronic control devices (4a-4c), the beam imaging devices (3a-3c), the beam superimposing device (6) and/or the projection lens (8).

10. The device according to any one of the preceding claims, wherein the central control device (15) is designed to control the electronic control devices (4a-4c), the beam imaging devices (3a-3c), the beam superimposing device (6) and/or the projection lens (8) in a time-variable manner.

11. The device according to any one of the preceding claims, also comprising a detection device (14) for detecting a signal which corresponds to the processing of laser material in the range of focus of the projection lens (8).

12. The device according to claim 11, wherein the detection device (14) is formed by an optoelectronic sensor or by a video camera.

13. The device according to any one of claims 11 and 12, wherein the central control device (15) is designed to control the electronic control devices (4a-4c), the beam imaging devices (3a-3c), the beam superimposing device (6) and/or the projection lens (8) as a function of the detected signal.

14. A method for processing laser material, in particular for a device for processing laser material according to any one of the preceding claims in which:
at least two laser beam sources (2a-2c) emit laser beams (5a-5) of different wavelengths,
the beam paths of the laser beams (5a-5c) are adjusted appropriately by means of respectively assigned beam imaging devices (6),
the laser beams (5a-5c) are superimposed on one another by means of a beam superimposing device (6), and
the superimposed laser beams (5a-5c) are displayed on a workpiece (12) by means of a projection lens (8), so that respective focal points are assigned to the laser beams (5a-5c) in the focus of the projection lens (8) on the workpiece (12),
wherein the beam imaging devices display the laser beams (5a-5c) onto the respective focal points in a predetermined arrangement which are varied by means of the beam imaging devices (3a-3c), and
wherein the powers of the respective laser beams (5a-5c) are varied differently by means of electronic control devices (4a-4c), so that the intensities of the respective focal points are varied in a prespecified manner in the focus of the projection lens (8).

15. The method according to claim 14, wherein the powers of the laser beams (5a-5c) are varied directly by modulating a respective laser diode current.

## Revendications

1. Dispositif pour l'usinage de matériau par laser, comprenant :
au moins deux sources de faisceau laser (2a-2c), qui émettent des faisceaux laser (5a-5c) de longueurs d'onde différentes,
des moyens de représentation de faisceau (3a-3c) associés aux sources de faisceau laser (2a-2c) respectives et prévus pour régler de manière appropriée les trajets des faisceaux laser (5a-5c) correspondants,
un dispositif de superposition de faisceaux (6), prévus pour superposer les faisceaux laser (5a-5c) les uns sur les autres,
une optique de représentation (8), prévue pour représenter les faisceaux laser (5a-5c) superposés sur une pièce (12), de manière à associer aux faisceaux laser (5a-5c) des points focaux correspondants dans le foyer de l'optique de représentation (8) sur la pièce (12), et
des dispositifs de commande électroniques (4a-4c), conçus pour varier les puissances des différents faisceaux laser (5a-5c), les intensités des points focaux respectifs dans le foyer de l'optique de représentation (8) étant variées de manière prédéfinie, **caractérisé**
**en ce que** les moyens de représentation de faisceau représentent les faisceaux laser (5a-5c) sur les points focaux respectifs suivant un agencement prédéfini qui peut être varié par les moyens de représentation de faisceau (3a-3c).

2. Dispositif selon la revendication 1, où le dispositif de superposition de faisceaux (6) comprend une pluralité de miroirs de renvoi (120, 121, 30, 31), au moins un des miroirs de renvoi (30, 31) étant disposé et réalisé de manière à être traversé par au moins un des faisceaux laser (5a-5c) et à réfléchir au moins un des faisceaux laser (5a-5c).

3. Dispositif selon l'une des revendications précédentes, où les moyens de représentation de faisceau règlent les trajets des faisceaux laser (5a-5c) respectifs associés, de manière à rendre ceux-ci sensiblement colinéaires, les faisceaux laser (5a-5c) étant collimatés.

4. Dispositif selon l'une des revendications précédentes, où les moyens de représentation de faisceau comprennent des miroirs de renvoi (120) pivotants et/ou rotatifs pour régler de manière appropriée l'agencement prédéfini des différents points focaux dans le foyer de l'optique de représentation (8).

5. Dispositif selon l'une des revendications précédentes, où les dispositifs de commande électroniques (4a-4c) varient les puissances des différents faisceaux laser (5a-5c) par commande des sources de faisceau laser (2a-2c) correspondantes.

6. Dispositif selon l'une des revendications précédentes, où chaque dispositif de commande électroniques (4a-4c) varie la transmission d'un atténuateur (3a-3c) respectif pouvant être électroniquement commandé, monté en aval de la source de faisceau laser (2a-2c) correspondante, pour varier les puissances des faisceaux laser (5a-5c) respectifs.

7. Dispositif selon l'une des revendications précédentes, où le dispositif de superposition de faisceaux (6) est réglable pour permettre d'ajuster la superposition des faisceaux laser (5a-5c), la représentation des différents points focaux étant variée dans le foyer de l'optique de représentation (8).

8. Dispositif selon l'une des revendications précédentes, où une pluralité de miroirs de renvoi (30, 31) sont réalisés par des filtres dichroïques avec un flanc de la transmission ou de la réflexion dans la plage spectrale de chaque faisceau laser (5a-5c) correspondant.

9. Dispositif selon l'une des revendications précédentes, comprenant en outre un dispositif de commande central (15) pour la commande des dispositifs de commande électroniques (4a-4c), des moyens de représentation de faisceau (3a-3c), du dispositif de superposition de faisceaux (6) et/ou de l'optique de représentation (8).

10. Dispositif selon l'une des revendications précédentes, où le dispositif de commande central (15) est prévu pour commander de manière temporellement variable les dispositifs de commande électroniques (4a-4c), les moyens de représentation de faisceau (3a-3c), le dispositif de superposition de faisceaux (6) et/ou l'optique de représentation (8).

11. Dispositif selon l'une des revendications précédentes, comprenant en outre un dispositif de détection (14) pour la détection d'un signal correspondant à l'usinage de matériau par laser dans la zone du foyer de l'optique de représentation (8).

12. Dispositif selon la revendication 11, où le dispositif de détection (14) est réalisé par un capteur optoélectronique ou par une caméra vidéo.

13. Dispositif selon la revendication 11 ou la revendication 12, où le dispositif de commande central (15) est prévu pour commander les dispositifs de commande électroniques (4a-4c), les moyens de représentation de faisceau (3a-3c), le dispositif de superposition de faisceaux (6) et/ou l'optique de représentation (8) en fonction du signal détecté.

14. Procédé d'usinage de matériau par laser, en particulier pour un dispositif pour l'usinage de matériau par laser selon l'une des revendications précédentes, où :
au moins deux sources de faisceau laser (2a-2c) émettent des faisceaux laser (5a-5c) de longueurs d'onde différentes,
les trajets des faisceaux laser (5a-5c) sont respectivement réglés de manière appropriée par des moyens de représentation de faisceau (3a-3c) associés,
les faisceaux laser (5a-5c) sont superposés les uns sur les autres au moyen d'un dispositif de superposition de faisceaux (6), et
les faisceaux laser (5a-5c) superposés sont représentés sur une pièce (12) au moyen d'une optique de représentation (8), de manière à associer aux faisceaux laser (5a-5c) des points focaux correspondants dans le foyer de l'optique de représentation (8) sur la pièce (12),
les moyens de représentation de faisceau représentant les faisceaux laser (5a-5c) sur les points focaux respectifs suivant un agencement prédéfini qui peut être varié par les moyens de représentation de faisceau (3a-3c), et
les puissances des puissances des différents faisceaux laser (5a-5c) étant variées par des dispositifs de commande électroniques (4a-4c), si bien que les intensités des différents points focaux varient de manière prédéfinie dans le foyer de l'optique de représentation (8).

15. Procédé selon la revendication 14, où les puissances des faisceaux laser (5a-5c) sont directement variées chacune par modulation d'un courant de diode laser correspondant.
